# DEMANDE DE BREVET EUROPEEN

(11) **EP 2 556 740 A1**
(43) Date de publication de la demande: **13.02.2013**
(21) Numéro de dépôt: 12172868.7
(22) Date de dépôt: 21.06.2012
(51) Int. Cl.: A01D 45/06

(54) **Installation de coupe pour la coupe de végétaux à tige verticale, tels que du chanvre, et moissonneuse-batteuse à chassis roulant équipé à l'avant d'une telle installation de coupe**

(30) Priorité: 10.08.2011 FR 1157271
(71) Demandeur: SA Ouest Agri, 85620 Rocheservière (FR)
(72) Inventeur: Abline, Jean-Marc, 85620 ROCHESERVIERE (FR)
(74) Mandataire: Godineau, Valérie

(57) **Abrégé**

Installation (1) de coupe pour la coupe de végétaux à tige verticale, du type positionnable à l'avant du châssis (2) roulant d'une moissonneuse-batteuse, et comprenant deux dispositifs (3, 4) de coupe superposables, dont l'un dit supérieur est muni d'une barre de coupe et dont l'autre dit inférieur est positionnable en série avec des moyens (6) de récupération et d'évacuation, et des moyens (5) d'entraînement en monte et baisse du dispositif (3) de coupe supérieur.

Le dispositif (3) de coupe inférieur comporte, en sus d'organes (10) de coupe rotatifs se présentant sous forme d'au moins une rangée de disques disposés à plat, côte à côte, en formant par une partie de leur tranchant, une ligne (13) de coupe parallèle à la barre de coupe, au moins une ouverture (11) d'évacuation des produits découpés, et des moyens (12) d'entraînement en déplacement desdits produits découpés vers ladite ouverture (11) d'évacuation. Les moyens (6) de récupération et d'évacuation en série avec le dispositif (3) de coupe inférieur comprennent une enceinte (61) logeant un rotor (62) de coupe, d'axe de rotation parallèle à la ligne (13) de coupe du dispositif (3) de coupe inférieur.

## Description

La présente invention concerne une installation de coupe pour la coupe de végétaux à tige verticale, tels que chanvre, cultivés en champs, ainsi qu'une moissonneuse-batteuse dont le châssis roulant est équipé à l'avant d'une installation de coupe du type précité.

Certains végétaux à tige verticale et, en particulier le chanvre ou certaines céréales sont des végétaux exigeants difficiles à récolter, notamment en raison de la grande longueur de leur tige et de la résistance de cette dernière.

Les machines traditionnelles pour récolter le chanvre se composent d'une pluralité de barres de coupe superposées attelées à un véhicule tracteur, chaque barre de coupe découpant la tige de chanvre à une hauteur déterminée. Les portions découpées de tige chutent au sol où elles y sont ramassées généralement par mise en balle. L'inconvénient d'une telle technique de récolte est que tiges et graines sont ramassées simultanément. Il est donc nécessaire par la suite de procéder à une opération de séparation des tiges et des graines qui sont valorisées de manière séparée.

Des machines pour la récolte de céréales avec lesquelles on récolte simultanément et de manière séparée, la partie supérieure de la tige chargée en grains et la partie inférieure de la tige sont également connues comme l'illustre le brevet FR 2.730.126. Dans ce cas, toutefois, une telle machine n'est pas applicable au chanvre car on constate, du fait de la nature des tiges de chanvre, un emmêlement des tiges qui entraîne des bourrages et disfonctionnements nombreux.

C'est pourquoi dans les machines de chanvre traditionnelles, dès la coupe, la récolte est déposée au sol sans passer par une machine.

Un but de la présente invention est donc de proposer une installation de coupe positionnable sur un châssis roulant de moissonneuse-batteuse dont la conception permet une application à la récolte de chanvre.

Un autre but de la présente invention est de proposer une installation de coupe positionnable sur un châssis roulant de moissonneuse-batteuse dont la conception permet une adaptation à des tiges de grande hauteur à profils variés.

A cet effet, l'invention a pour objet une installation de coupe pour la coupe de végétaux à tige verticale, tels que du chanvre, cultivés en champs, ladite installation étant du type positionnable à l'avant du châssis roulant, équipé au moins de moyens de convoyage et de moyens de battage des produits convoyés, d'une moissonneuse-batteuse, ladite installation de coupe comprenant un dispositif de coupe, dit inférieur, et un dispositif de coupe, dit supérieur, positionnable au-dessus du dispositif de coupe inférieur, à l'état couplé des dispositifs de coupe au châssis roulant de la moissonneuse-batteuse, des moyens d'entraînement en monte et baisse du dispositif de coupe supérieur, et des moyens de récupération et d'évacuation positionnables en série avec le dispositif de coupe inférieur,
le dispositif de coupe dit supérieur, apte à alimenter en produits les moyens de convoyage du châssis roulant de la moissonneuse-batteuse, étant équipé, dans sa partie dite avant, d'une barre de coupe définissant une ligne de coupe apte à s'étendre transversalement au sens de déplacement du châssis roulant de la moissonneuse-batteuse et, dans sa partie dite arrière, d'un tablier de coupe muni d'au moins une ouverture d'évacuation des têtes de tiges découpées par la barre de coupe,
le dispositif de coupe dit inférieur, comportant des organes de coupe définissant une ligne de coupe apte à s'étendre parallèlement, à un niveau inférieur par rapport au sol, et en arrière de la ligne de coupe du dispositif de coupe supérieur pour pouvoir notamment découper les tiges dépourvues de tête,
**caractérisée en ce que** le dispositif de coupe inférieur comporte, en sus des organes de coupe, au moins une ouverture d'évacuation des produits découpés, et des moyens d'entraînement en déplacement desdits produits découpés vers ladite au moins une ouverture d'évacuation, en ce que les organes de coupe du dispositif de coupe inférieur sont des organes de coupe rotatifs se présentant sous forme d'au moins une rangée de disques disposés à plat, côte à côte, et formant par une partie de leur tranchant, dite partie avant, la ligne de coupe du dispositif de coupe inférieur et en ce que les moyens de récupération et d'évacuation positionnables en série avec le dispositif de coupe inférieur comprennent une enceinte, dite de broyage, logeant au moins un rotor à fonction de coupe, d'axe de rotation sensiblement parallèle à la ligne de coupe du dispositif de coupe inférieur, ladite enceinte étant, pour sa communication avec l'ouverture d'évacuation du dispositif de coupe inférieur, munie d'une ouverture d'entrée et, pour sa vidange, d'une ouverture de sortie ménagée, de préférence, en un emplacement de l'enceinte apte à permettre une dépose au sol par gravité du contenu de l'enceinte.

Grâce à la combinaison d'organes de coupe rotatifs et par cisaillement, il est possible de découper les tiges à leur base et au niveau de leur partie supérieure, la découpe à la base des tiges s'opérant par l'intermédiaire des organes de coupe rotatifs. La mise en série de deux types d'organes de coupe rotatifs à axe de rotation sensiblement orthogonaux entre eux au niveau de la coupe inférieure avant évacuation pour une dépose au sol permet de s'affranchir des problèmes d'emmêlement et de bourrage de la machine.

L'utilisation d'organes de coupe par cisaillement au niveau de la partie des tiges destinée à pénétrer dans la moissonneuse-batteuse permet de reproduire un fonctionnement classique d'une moissonneuse-batteuse

Selon une forme de réalisation préférée de l'invention, les moyens d'entraînement en monte et baisse du dispositif de coupe supérieur comprennent :
- une structure couplable au châssis roulant de la moissonneuse-batteuse et comportant au moins un montant, de préférence au moins deux montants parallèles reliés entre eux par des traverses, et
- des moyens d'entraînement en déplacement du dispositif de coupe supérieur à coulissement le long dudit ou des montants de la structure.

Cette conception des moyens d'entraînement en monte et baisse permet de faire varier à l'intérieur d'une large plage la distance des lignes de coupe des dispositifs de coupe suivant une direction verticale, ce qui permet une adaptation de l'installation de coupe à des tiges de grande hauteur ou de faible hauteur.

De préférence, ladite structure est une structure mobile couplable de manière articulée au châssis roulant de la moissonneuse-batteuse.

En particulier, ladite structure comprend, pour son couplage au châssis roulant de la moissonneuse-batteuse, d'une part, des moyens de liaison à pivotement positionnés ou positionnables au niveau de l'extrémité dite inférieure du ou des montants et formant, à l'état positionné, une liaison d'axe pivot sensiblement parallèle à la ligne de coupe du dispositif de coupe supérieur, d'autre part, au moins un actionneur, tel qu'un vérin, apte à entrainer en déplacement à pivotement ladite structure en fonction du positionnement relatif souhaité entre les lignes de coupe des dispositifs de coupe supérieur et inférieur.

Ce déplacement à pivotement de la structure permet de faire varier à l'intérieur d'une large plage la distance entre les lignes de coupe des dispositifs de coupe suivant une direction dite avant-arrière parallèle à la ligne d'avancement ou de déplacement du châssis roulant de la moissonneuse-batteuse, ou à l'axe longitudinal du châssis roulant de la moissonneuse-batteuse, à l'état couplé de l'installation de coupe à la moissonneuse-batteuse.

Il est ainsi possible, pour l'installation de coupe, de s'adapter à des tiges présentant un fléchissement important, par exemple sous l'action du vent, de sorte que l'extrémité supérieure de la tige est fortement décalée par rapport à la base de la tige.

Pour réduire l'encombrement du dispositif de coupe inférieur, les moyens d'entraînement en déplacement desdits produits découpés vers ladite au moins une ouverture d'évacuation du dispositif de coupe inférieur se présentent sous forme de disques à dents dont au moins certains forment avec un disque de coupe du dispositif de coupe inférieur avec lequel ils sont associés, une pile de disques. Au moins certains des disques à dents encadrent, sous forme de piles de disques, l'ouverture d'évacuation du dispositif de coupe inférieur.

Pour aider à l'entraînement en déplacement des produits récoltés, ladite ouverture d'évacuation du dispositif de coupe inférieur est ménagée dans la partie dite de fond d'un tablier de coupe dont les flancs sont équipés d'une vis d'alimentation positionnée parallèlement et au-dessus du bord supérieur de chaque flanc, au niveau d'une encoche ménagée dans ledit flanc.

L'invention a encore pour objet un moissonneuse-batteuse du type comprenant un châssis roulant équipé au moins de moyens de convoyage et de moyens de battage des produits convoyés et, à l'avant dudit châssis roulant, pris dans le sens d'avancement dudit châssis, une installation de coupe de végétaux à tiges verticales,
**caractérisée en ce que** ladite installation de coupe est conforme à celle décrite ci-dessus, en ce que l'enceinte dite de broyage est disposée au dessous des moyens de convoyage du châssis roulant, en ce que l'ouverture d'évacuation du dispositif de coupe supérieur est positionnée au-dessus et à la verticale ou immédiatement en avant des moyens de convoyage pris dans le sens d'avancement de la moissonneuse-batteuse, et en ce que le dispositif de coupe supérieur et ses moyens d'entraînement en monte et baisse forment un ensemble mobile monté à pivotement autour d'un axe sensiblement parallèle aux lignes de coupe des dispositifs de coupe.

L'invention sera bien comprise à la lecture de la description suivante d'exemples de réalisation, en référence aux dessins annexés dans lesquels :

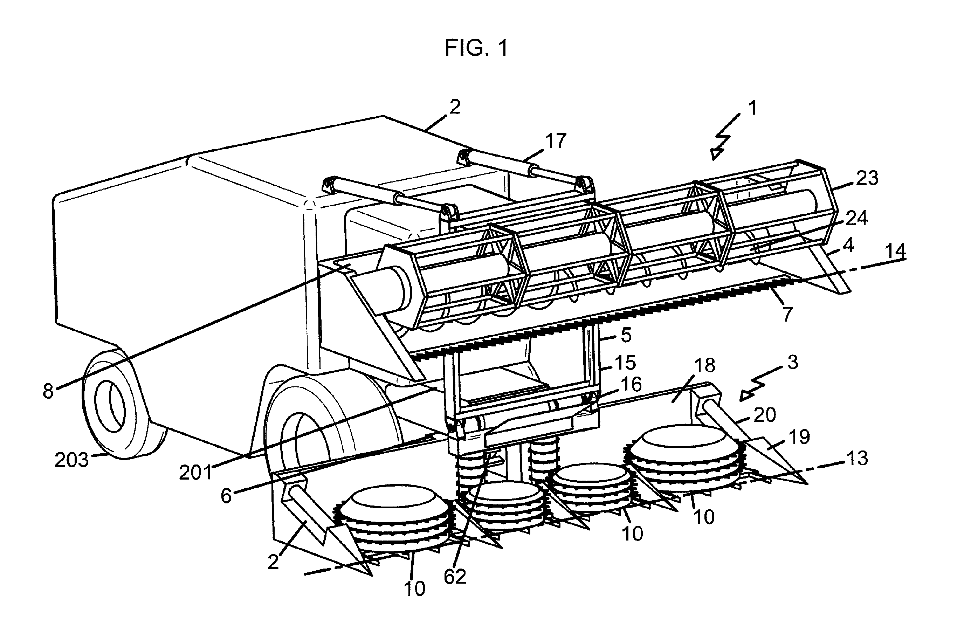

La figure 1 représente une vue en perspective d'une moissonneuse-batteuse dont le châssis roulant est équipé d'une installation de coupe conforme à l'invention;

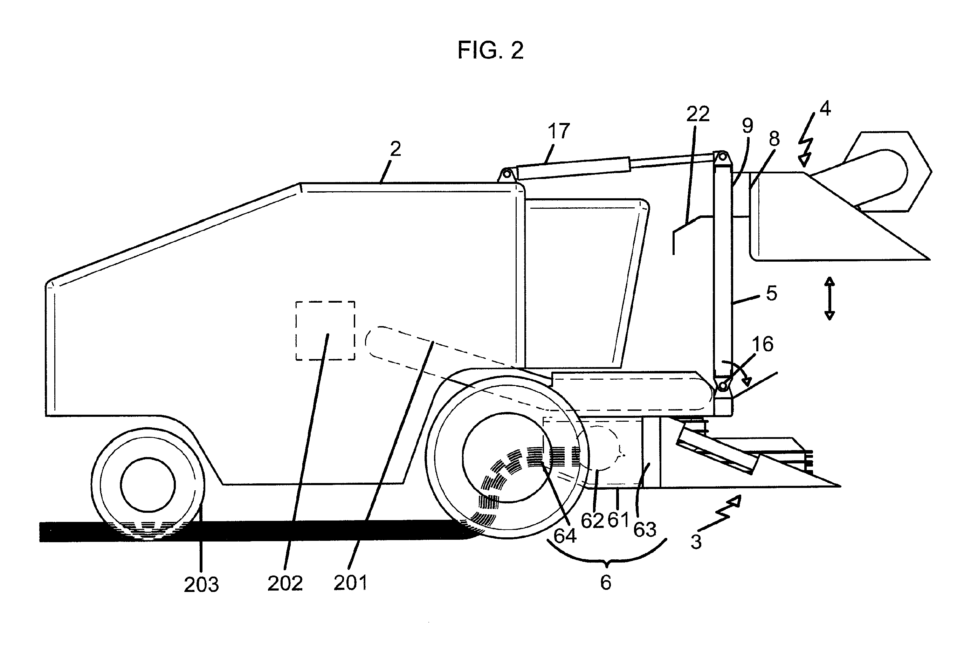

La figure 2 représente une vue de côté de la figure 1, les moyens de convoyage et de battage du châssis roulant ayant été représentés de manière schématique et en transparence;

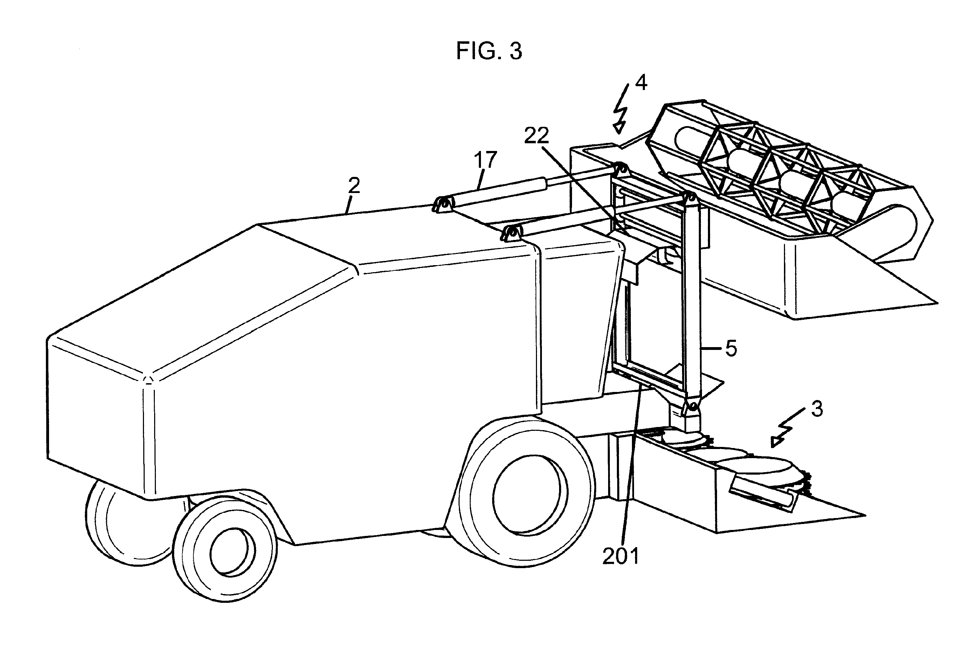

La figure 3 représente une vue en perspective de la figure 1 vue sous un autre angle;

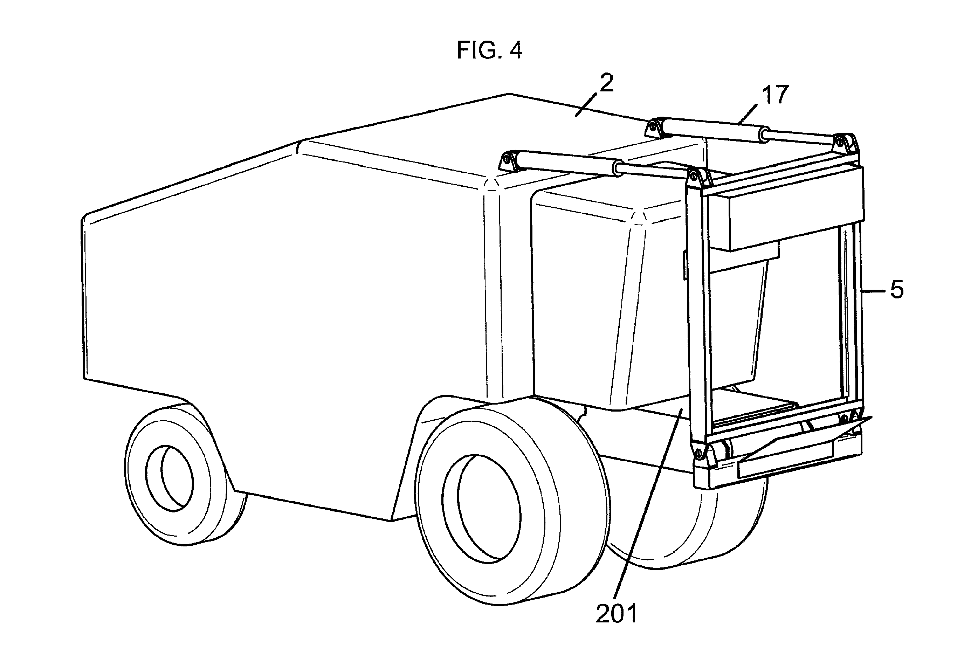

La figure 4 représente une vue en perspective d'une moissonneuse-batteuse dépourvue de ses dispositifs de coupe pour mieux visualiser les moyens d'entraînement en monte et baisse du dispositif de coupe supérieur;
La figure 5 représente une vue en perspective du dispositif de coupe inférieur et des moyens de récupération et d'évacuation positionnables en série avec le dispositif de coupe inférieur;

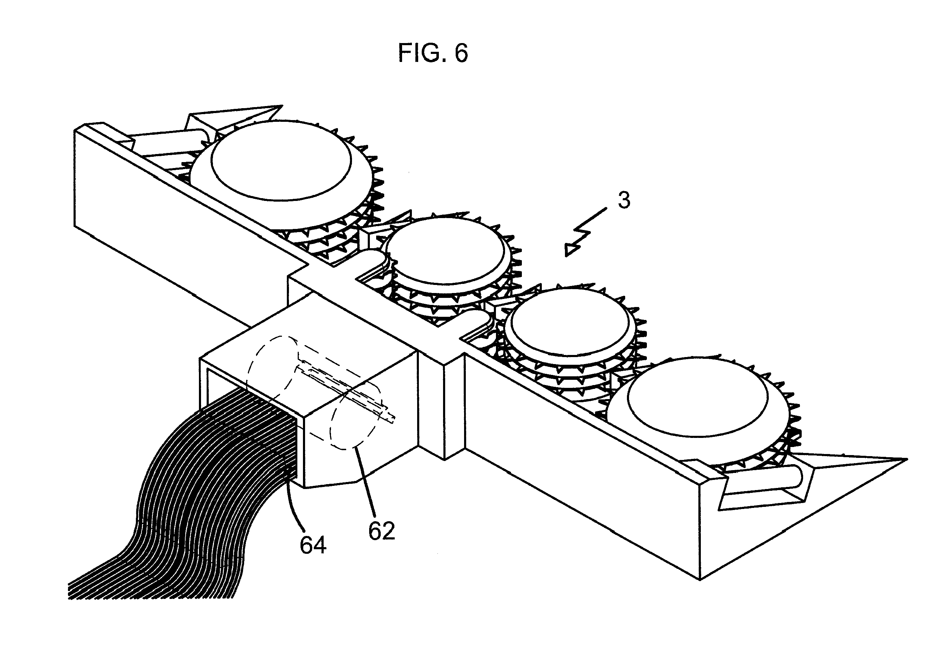

La figure 6 représente une vue en perspective sous un autre angle de la figure 5;

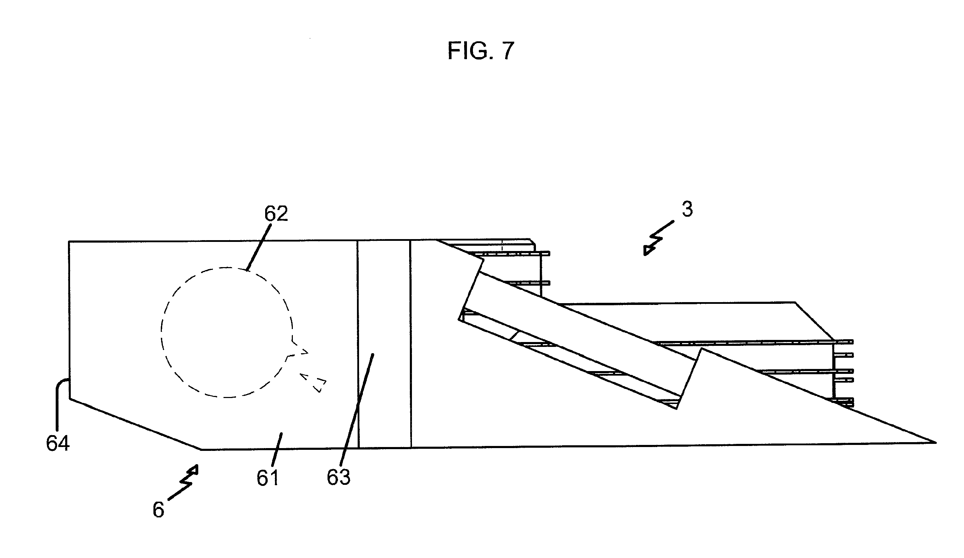

La figure 7 représente une vue de côté de la figure 5, le rotor et son contre-couteau ayant été représentés en pointillé;
La figure 8 représente une vue en perspective du dispositif de coupe supérieur.

Comme mentionné ci-dessus, l'installation 1 de coupe, objet de l'invention, est plus particulièrement destinée à la coupe de végétaux à tige verticale, tels que du chanvre, même si elle peut s'appliquer également à la coupe de céréales ou autres végétaux.

Cette installation 1 de coupe est positionnable à l'avant du châssis 2 roulant d'une moissonneuse-batteuse. Ce châssis 2 de la moissonneuse-batteuse est équipé de deux roues 203 avant et de deux roues 203 arrières et de moyens 201 de convoyage des produits récoltés, ces moyens 201 de convoyage étant généralement réalisés à l'aide d'au moins une bande transporteuse sans fin.

Ce châssis 2 roulant comporte encore des moyens 202 de battage formés par exemple d'un batteur et d'un contre-batteur. En aval de ces moyens 202 de battage, le châssis 2 roulant peut être équipé de moyens de séparation tels que des moyens de secouage des grains de la tige et des moyens de stockage desdits grains à l'état séparé, le reste de la séparation, pouvant être déposé au sol.

Cette installation 1 de coupe, destinée à être couplée au châssis 2 roulant de la moissonneuse-batteuse à l'avant de ce dernier, comprend deux dispositifs 3, 4 de coupe positionnable l'un au-dessus de l'autre, à l'état couplé de l'installation de coupe au châssis 2 roulant de la moissonneuse-batteuse. Le dispositif de coupe positionné le plus au-dessus, c'est-à-dire à un niveau supérieur par rapport à l'autre dispositif de coupe, est représenté en 4 aux figures et appelé dispositif de coupe supérieur; le dispositif de coupe positionné le plus au-dessous, c'est-à-dire à un niveau inférieur à l'autre dispositif de coupe, et représenté en 3 aux figures, est appelé dispositif de coupe inférieur.

Ces dispositifs de coupe présentent une forme allongée. Leur axe longitudinal s'étend transversalement au sens de déplacement du châssis 2 roulant le long d'une largeur de la bande parcourue par la moissonneuse-batteuse à l'état couplé des dispositifs de coupe au châssis 2 roulant de ladite moissonneuse-batteuse.

L'installation comporte également des moyens 5 d'entraînement en monte et baisse du dispositif 3 de coupe supérieur. Ces moyens 5 d'entraînement en monte et baisse sont interposables entre dispositif de coupe supérieur et châssis 2 roulant.

L'installation comporte encore des moyens 6 de récupération et d'évacuation des produits, en particulier des tiges, découpés par le dispositif 3 de coupe inférieur. Ces moyens 6 de récupération et d'évacuation sont disposés en série avec le dispositif 3 de coupe inférieur, c'est-à-dire immédiatement en arrière du dispositif 3 de coupe inférieur, pris dans le sens d'avancement de la moissonneuse-batteuse, pour récupérer les tiges découpées par le dispositif 3 de coupe inférieur.

Le dispositif 4 de coupe supérieur, apte à alimenter en produit les moyens 201 de convoyage du châssis 2 roulant de la moissonneuse-batteuse, est équipé, dans sa partie dite avant, d'une barre 7 de coupe définissant une ligne 14 de coupe qui, à l'état couplé de l'installation de coupe au châssis 2 roulant, s'étend transversalement au sens de déplacement du châssis 2 roulant, le long d'une largeur de la bande de champs parcourue par la moissonneuse-batteuse.

Par barre de coupe, on entend un dispositif de coupe par sectionnement comportant généralement une lame d'acier animée d'un mouvement alternatif et coulissant dans un porte-lame. En effet, la barre de coupe est généralement formée d'un élément mobile, la lame de coupe animée d'un mouvement alternatif transversal et d'une partie fixe de porte-lame dans lequel la lame de coupe coulisse.

Le dispositif 4 de coupe supérieur comporte encore, dans sa partie arrière, par rapport au sens de déplacement du châssis 2 roulant de la moissonneuse-batteuse, un tablier 8 de coupe muni d'au moins une ouverture 9 d'évacuation des têtes de tiges découpées par la barre 7 de coupe.

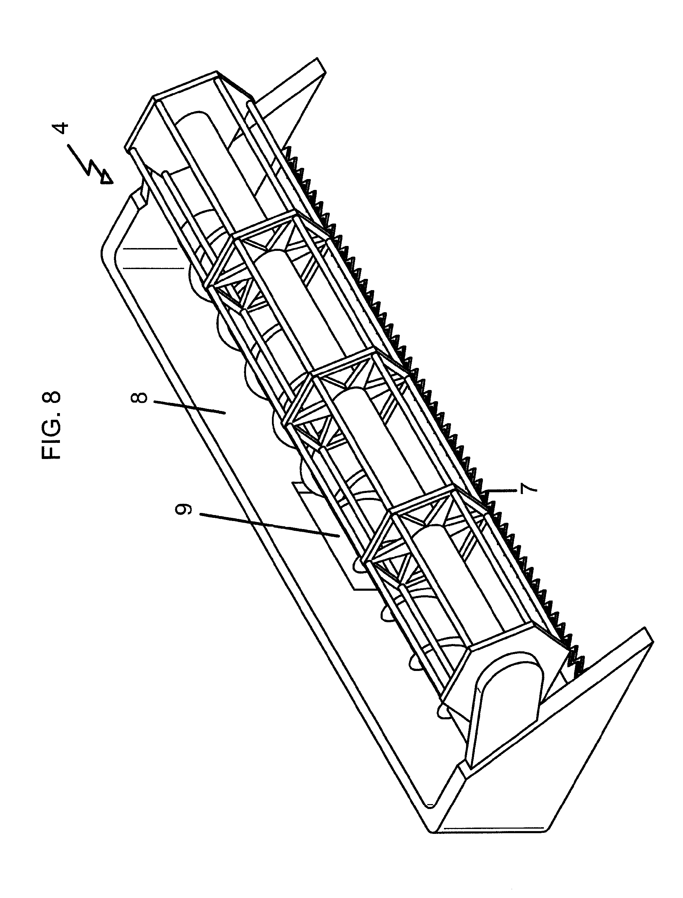

De manière classique, et comme l'illustre la figure 8, le dispositif 4 de coupe supérieur comporte encore un rabatteur 23 formé d'un rouleau-cage s'étendant entre les deux flancs du tablier 8 de coupe avec son axe de rotation parallèle à la ligne 14 de coupe, et en avant de la ligne 14 de coupe, éventuellement des diviseurs. L'objectif du rabatteur 23 est d'amener par sa rotation la tête des tiges à la barre de coupe.

Ce dispositif 4 de coupe supérieur comporte encore en aval du rabatteur 23 et de la barre 7 de coupe, à l'intérieur de la chambre ouverte délimitée par le tablier 8 de coupe, une vis 24 d'alimentation formée d'une vis sans fin ou de deux vis sans fin à pas inversé.

Cette ou ces vis 24 disposée(s) derrière la barre 7 de coupe et parallèlement à celle-ci, ramène(nt) les têtes de tiges vers l'ouverture 9 ou chaque ouverture 9 d'évacuation ménagée dans ledit tablier 8 de coupe, en particulier dans la face de fond du tablier 8 de coupe qui comprend au moins un fond et des flancs.

Généralement, la ou chaque ouverture 9 d'évacuation du dispositif 4 de coupe supérieur est munie, au niveau de la face formant dos du tablier 8 de coupe du dispositif 4 de coupe supérieur, d'une plaque 22 déflectrice.

Cette plaque 22 déflectrice oriente les produits découpés par le dispositif de coupe supérieur vers les moyens de convoyage du châssis 2 roulant. En effet, l'ouverture 9 d'évacuation du dispositif 4 de coupe supérieur est positionnée au-dessus et à la verticale ou immédiatement en avant des moyens 201 de convoyage pris dans le sens d'avancement de la moissonneuse-batteuse, à l'état couplé de l'installation de coupe au châssis 2 roulant de la moissonneuse-batteuse, de sorte que le flux de produits récoltés sortant de l'ouverture 9 du dispositif de coupe supérieur chute et atterrit sur la surface d'appui mobile des moyens 201 de convoyage du châssis 2 roulant de la moissonneuse-batteuse, pour ensuite être amené aux moyens 202 de battage de la moissonneuse-batteuse.

Comme mentionné ci-dessus, l'installation de coupe comporte des moyens 5 d'entraînement en monte et baisse du dispositif 4 de coupe supérieur. L'ensemble dispositif de coupe supérieur et moyens 5 d'entraînement en monte et baisse est couplé, de manière articulé, de préférence à pivotement, au châssis 2 roulant de la moissonneuse-batteuse.

Dans les exemples représentés, les moyens 5 d'entraînement en monte et baisse du dispositif 4 de coupe supérieur comprennent une structure 15 porteuse du dispositif de coupe supérieur et couplable au châssis 2 roulant de la moissonneuse-batteuse. Cette structure 15, telle que représentée, comporte deux montants parallèles reliés entre eux par des traverses. Les moyens 5 d'entraînement comportent encore des moyens d'entraînement en déplacement du dispositif 4 de coupe supérieur à coulissement le long dudit ou des montants de la structure 15.

Les moyens d'entraînement en déplacement du dispositif de coupe supérieur peuvent être formés au moins par un vérin porté par la structure 15 et un câble relié par l'une de ses extrémités au vérin, en particulier à une tige du vérin, et par son autre extrémité au dispositif de coupe supérieur pour permettre le déplacement en monte et baisse du dispositif de coupe supérieur le long du ou des montants de la structure par simple extension ou rétraction de la tige du vérin. Ces moyens peuvent également être formés à la manière d'un treuil d'un tambour ou arbre à axe de rotation parallèle à une traverse de la structure et d'un câble apte à s'enrouler autour dudit tambour, ledit câble étant à une extrémité fixé au tambour et à son autre extrémité au dispositif de coupe supérieur.

Dans les exemples représentés, ladite structure 15 est une structure mobile couplable de manière articulée au châssis 2 roulant de la moissonneuse-batteuse. Ladite structure 5 comprend, pour son couplage au châssis 2 roulant de la moissonneuse-batteuse, d'une part, des moyens 16 de liaison à pivotement positionnés ou positionnables au niveau de l'extrémité dite inférieure du ou des montants et formant à l'état positionné une liaison d'axe pivot sensiblement parallèle à la ligne 14 de coupe du dispositif 4 de coupe supérieur, d'autre part, un actionneur 17, tel qu'un vérin, apte à entrainer en déplacement à pivotement ladite structure 15 en fonction du positionnement relatif souhaité entre les lignes 14, 13 de coupe des dispositifs de coupe supérieur 4 et inférieur 3. Actionneur 17 et liaison 16 pivot sont à chaque fois disposés entre châssis 2 roulant et structure 15.

En particulier, il est prévu deux vérins parallèles agissant chacun sur un montant de la structure au voisinage de l'extrémité supérieur dudit montant. La rétraction des vérins entraîne, par pivotement de la structure vers l'arrière de la moissonneuse-batteuse, un rapprochement du dispositif 4 de coupe supérieur du sommet du châssis 2 roulant, tandis qu'une extension des vérins entraîne, par pivotement de la structure vers l'avant de la moissonneuse-batteuse, un écartement du dispositif 4 de coupe supérieur du sommet du châssis 2 roulant, chaque vérin étant généralement interposé entre la structure et le sommet du châssis 2 roulant, en particulier le plafond de la cabine du châssis 2 roulant.

Au cours de ce déplacement à pivotement de la structure, on fait varier la distance qui sépare les lignes 13, 14 de coupe des dispositifs de coupe pris dans le sens avant-arrière par rapport à la direction de déplacement de la moissonneuse-batteuse.

Ainsi, lorsque l'on souhaite positionner la ligne de coupe du dispositif 4 de coupe supérieur très en avant, on provoque l'extension des vérins. A l'inverse, lorsque l'on souhaite positionner la ligne de coupe du dispositif 4 de coupe supérieur légèrement en avant de la ligne de coupe du dispositif 3 de coupe inférieur, on provoque la rétraction des vérins.

Dans tous les cas, le flux de produits évacués par le dispositif de coupe supérieur retombe sur la surface d'appui mobile des moyens de convoyage du châssis 2 roulant de la moissonneuse-batteuse.

L'extension ou la rétraction des tiges des vérins provoquent donc un déplacement à pivotement de la base de la structure autour de son axe pivot de liaison au châssis 2 roulant. Cette commande des vérins peut s'opérer par le conducteur de la moissonneuse-batteuse à partir de sa cabine. Il en est de même pour le réglage en monte et baisse du dispositif 4 de coupe supérieur.

Le dispositif 3 de coupe inférieur comporte, quant à lui, des organes 10 de coupe définissant une ligne 13 de coupe qui, à l'état couplé du dispositif de coupe au châssis 2 roulant de la moissonneuse-batteuse, s'étend parallèlement, à un niveau inférieur par rapport au sol, et en arrière de la ligne 14 de coupe du dispositif 4 de coupe supérieur, notamment pour pouvoir découper les tiges dépourvues de têtes. En effet, la ligne 13 de coupe du disposition 3 de coupe inférieur, qui est située à un niveau inférieur par rapport à la ligne 14 de coupe du dispositif 4 de coupe supérieur, est toujours la ligne de coupe la plus proche des roues 203 avant de la moissonneuse-batteuse et s'étend donc en retrait ou en arrière ou en aval de la ligne de coupe du dispositif 4 de coupe supérieur.

De manière caractéristique à l'invention, ce dispositif 3 de coupe inférieur comporte en sus des organes 10 de coupe au moins une ouverture 11 d'évacuation des produits découpés et des moyens 12 d'entraînement en déplacement desdits produits découpés vers ladite au moins ouverture 11 d'évacuation.

Les organes 10 de coupe du dispositif de coupe inférieur sont des organes de coupe rotatifs se présentant sous forme d'au moins une rangée de disques à axes de rotation parallèles disposés à plat côté à côté et formant, par une partie de leur tranchant dite partie avant, la ligne 13 de coupe du dispositif 3 de coupe inférieur.

Des moyens 6 de récupération et d'évacuation des produits découpés par le dispositif de coupe inférieur sont positionnables en série avec le dispositif 3 de coupe inférieur. Ces moyens 6 de récupération et d'évacuation comprennent une enceinte 61, dite de broyage, logeant au moins un rotor 62 à fonction de coupe. Ce rotor 62 présente un axe de rotation sensiblement parallèle à la ligne 13 de coupe du dispositif 3 de coupe inférieur et orthogonal à l'axe de rotation des disques de coupe constitutifs des organes 10 de coupe du dispositif de coupe inférieur.

L'enceinte 61 des moyens 6 de récupération communique avec l'ouverture 11 d'évacuation du dispositif 3 de coupe inférieur et, est, à cet effet, munie d'une ouverture 63 d'entrée qui peut être confondue ou raccordée à l'ouverture 11 d'évacuation du dispositif 3 de coupe inférieur. Cette même enceinte est, pour sa vidange, munie d'une ouverture 64 de sortie ménagée, de préférence, en un emplacement 61 de l'enceinte apte à permettre une dépose au sol par gravité du contenu de l'enceinte 61.

Généralement, cette ouverture 64 de sortie est ménagée dans la face formant fond ou dans la face arrière de l'enceinte 61 pris par rapport au sens d'avancement du châssis 2 roulant de la moissonneuse-batteuse.

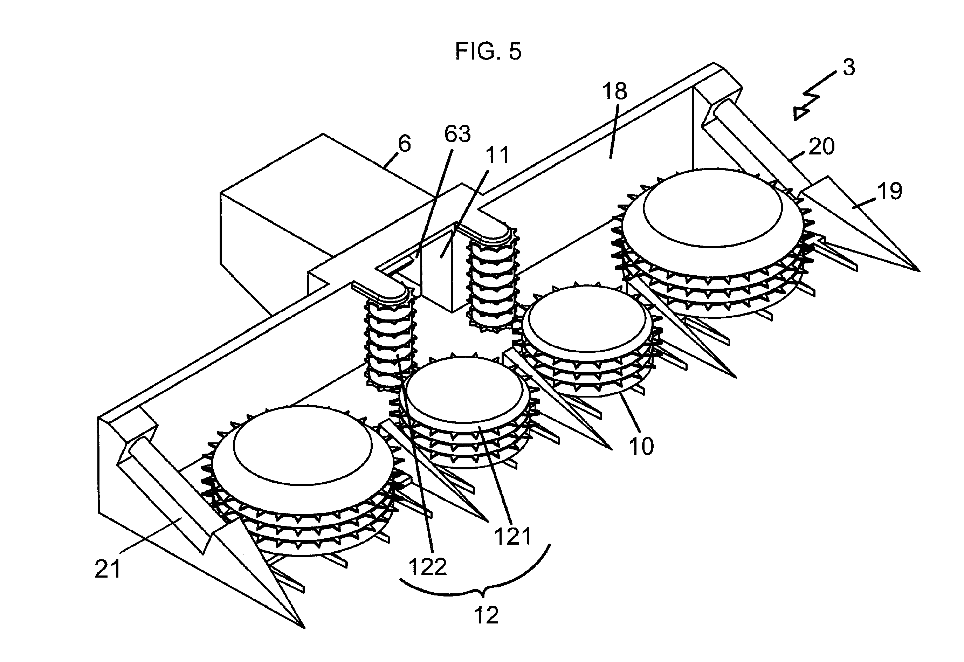

Dans l'exemple représenté à la figure 5, ladite ouverture 11 d'évacuation du dispositif 3 de coupe inférieur est ménagée dans la partie dite de fond d'un tablier 18 de coupe dont les flancs 19 sont équipés d'une vis 20 d'alimentation positionnée parallèlement et au-dessus du bord supérieur de chaque flanc 19, au niveau d'une encoche 21 ménagée dans ledit flanc 19.

Cette ouverture 11 d'évacuation est disposée alignée avec l'ouverture 63 d'entrée de l'enceinte 61 de broyage. Les moyens 12 d'entraînement en déplacement desdits produits découpés vers ladite au moins une ouverture 11 d'évacuation du dispositif 3 de coupe inférieur se présentent sous forme de disques à dents dont au moins certains 121 forment avec un disque 10 de coupe du dispositif 3 de coupe inférieur avec lequel ils sont associés, une pile de disques.

Ainsi dans l'exemple représenté aux figures, le dispositif 3 de coupe inférieur comporte quatre piles de disques dont le disque le plus en-dessous de la pile de disques est un disque de coupe, les autres disques de la pile étant des disques à dents à fonction d'entraînement en déplacement des tiges. Chaque pile est ici formée de quatre disques superposés. Des diviseurs peuvent être disposés en avant de ces piles de disques disposées côte à côte le long d'une ligne parallèle à la ligne de coupe du dispositif de coupe supérieur.

Par ailleurs, au moins certains représentés en 122 aux figures des disques à dents encadrent, sous forme de piles de disques, l'ouverture 11 d'évacuation du dispositif 3 de coupe inférieur. Ces disques forment deux piles de disques supplémentaires disposées le long des bords verticaux de l'ouverture 11 d'évacuation du dispositif 3 de coupe inférieur, comme l'illustre la figure 5. Ils facilitent la sortie des tiges à travers ladite ouverture 11 d'évacuation.

Une fois cette ouverture 11 d'évacuation franchie, les tiges parviennent dans l'enceinte de broyage. Dans l'enceinte de broyage est logé le rotor 62 à fonction de coupe qui est un rotor à couteau(x) associé à un contre-couteau. Le rotor peut donc découper les tiges en petits morceaux d'une longueur généralement comprise entre 250 et 600 millimètres.

Les tiges découpées sont ensuite évacuées de l'enceinte par l'intermédiaire d'une ouverture 64 de sortie de l'enceinte ménagée, ici, dans la face arrière de l'enceinte, de sorte que, dans ce cas, les ouvertures 63 d'entrée et 64 de sortie de l'enceinte se font face.

Généralement, les produits issus de l'enceinte de broyage sont déposés au sol sous forme d'andain pour ensuite être ramassés et stockés de préférence en balle. Généralement, la sortie de paille de la moissonneuse-batteuse est disposée sensiblement dans un même plan vertical passant par l'axe longitudinal de la moissonneuse-batteuse que l'orifice 64 de sortie de l'enceinte de broyage pour permettre la dépose de la paille issue de la moissonneuse-batteuse au sommet ou le long de l'andain formé à l'aide du dispositif de coupe inférieur.

Généralement, les organes de coupe rotatifs ou par cisaillement, le rotor, la vis d'alimentation, le rabatteur du dispositif de coupe supérieur, et les disques d'amenée du dispositif de coupe inférieur sont mus soit par une transmission mécanique prélevant le mouvement sur un organe de transmission préexistant du châssis 2 roulant de la moissonneuse-batteuse, soit à l'aide d'un moteur hydraulique. Ces éléments de transmission n'ont pas été représentés.

A l'état couplé de l'installation de coupe au châssis 2 roulant de la moissonneuse-batteuse, la moissonneuse-batteuse comprend donc un châssis 2 roulant équipé au moins de moyens 201 de convoyage et de moyens 202 de battage des produits convoyés et, à l'avant dudit châssis 2 roulant, pris dans le sens d'avancement dudit châssis, une installation 1 de coupe de végétaux à tiges verticales conforme à celle décrite ci-dessus. Dans cette moissonneuse-batteuse, l'enceinte 61 dite de broyage est disposée au dessous des moyens 201 de convoyage du châssis 2 roulant, l'ouverture 9 d'évacuation du dispositif 4 de coupe supérieur est positionnée au-dessus et à la verticale ou immédiatement en avant des moyens 201 de convoyage pris dans le sens d'avancement de la moissonneuse-batteuse, et le dispositif 4 de coupe supérieur et ses moyens 5 d'entraînement en monte et baisse forment un ensemble mobile monté à pivotement autour d'un axe sensiblement parallèle aux lignes 13, 14 de coupe des dispositifs de coupe. La ligne 13 de coupe du dispositif de coupe inférieur est positionnée en retrait ou en arrière de la ligne de coupe supérieure.

Comme l'installation 1 de coupe est montée amovible sur le châssis 2 roulant de la moissonneuse-batteuse, elle peut être démontée et remplacée par une installation de coupe traditionnelle pour une utilisation classique de la moissonneuse-batteuse.

Le fonctionnement d'une telle moissonneuse-batteuse est le suivant:
On suppose que l'installation de coupe est installée sur le châssis 2 roulant de la moissonneuse-batteuse, c'est-à-dire que les moyens 6 de récupération et d'évacuation ont été disposés et fixés sous les moyens 201 de convoyage du châssis 2 roulant et que l'ensemble formé du dispositif de coupe supérieur et des moyens d'entraînement en monte et baisse de ce dispositif de coupe supérieur a été couplé par une liaison pivot au châssis 2 roulant de la moissonneuse-batteuse et a été raccordé par lesdits actionneurs au sommet du châssis 2 roulant de la moissonneuse-batteuse. L'installation s'opère donc de manière extrêmement rapide et aisée.

Dans un premier temps, le conducteur règle l'inclinaison de la structure 15 porteuse du dispositif 4 de coupe supérieur et ajuste le niveau en hauteur du dispositif de coupe supérieur sur la structure porteuse. Une fois ces réglages opérés, la coupe peut commencer.

La conduite de la moissonneuse-batteuse s'opère de manière similaire à une moissonneuse-batteuse traditionnelle. Les produits coupés par le dispositif de coupe inférieur, à savoir essentiellement des tiges, sont, après passage dans l'enceinte de broyage, déposés au sol au fur et à mesure de l'avance de la moissonneuse-batteuse, tandis que les produits coupés par le dispositif 4 de coupe supérieur sont traités par la moissonneuse-batteuse, les grains étant stockés dans la moissonneuse-batteuse, le reste étant éventuellement rejeté à l'arrière de la moissonneuse-batteuse pour atterrir au sol, de préférence au sommet de l'andain formé à l'aide des produits coupés par le dispositif de coupe inférieur.

Grains et tiges sont récoltés séparément ce qui facilite leur traitement ultérieur.

Il est à noter que pour le transport de la moissonneuse-batteuse sur route, le dispositif de coupe supérieur peut être désolidarisé du reste de l'installation de coupe et installé sur un chariot attelable à l'arrière de la moissonneuse-batteuse. Ce chariot est de préférence formé d'un châssis roulant équipé d'une flèche d'attelage, ce châssis roulant étant surmonté d'un plancher couplé audit châssis roulant par un système de parallélogrammes déformables pour permettre le déplacement dans le sens d'un écartement ou d'un rapprochement du plancher par rapport au châssis roulant.

## Revendications

1. Installation (1) de coupe pour la coupe de végétaux à tige verticale, tels que du chanvre, cultivés en champs, ladite installation (1) étant du type positionnable à l'avant du châssis (2) roulant, équipé au moins de moyens (201) de convoyage et de moyens (202) de battage des produits convoyés, d'une moissonneuse-batteuse, ladite installation (1) de coupe comprenant un dispositif (3) de coupe, dit inférieur, et un dispositif (4) de coupe, dit supérieur, positionnable au-dessus du dispositif (3) de coupe inférieur, à l'état couplé des dispositifs (3, 4) de coupe au châssis (2) roulant de la moissonneuse-batteuse, des moyens (5) d'entraînement en monte et baisse du dispositif (4) de coupe supérieur, et des moyens (6) de récupération et d'évacuation positionnables en série avec le dispositif (3) de coupe inférieur,
le dispositif (4) de coupe dit supérieur, apte à alimenter en produits les moyens (201) de convoyage du châssis (2) roulant de la moissonneuse-batteuse, étant équipé, dans sa partie dite avant, d'une barre (7) de coupe définissant une ligne (14) de coupe apte à s'étendre transversalement au sens de déplacement du châssis (2) roulant de la moissonneuse-batteuse et, dans sa partie dite arrière, d'un tablier (8) de coupe muni d'au moins une ouverture (9) d'évacuation des têtes de tiges découpées par la barre (7) de coupe,
le dispositif (3) de coupe dit inférieur, comportant des organes (10) de coupe définissant une ligne (13) de coupe apte à s'étendre parallèlement, à un niveau inférieur par rapport au sol, et en arrière de la ligne (14) de coupe du dispositif (4) de coupe supérieur pour pouvoir notamment découper les tiges dépourvues de tête,
**caractérisée en ce que** le dispositif (3) de coupe inférieur comporte, en sus des organes (10) de coupe, au moins une ouverture (11) d'évacuation des produits découpés, et des moyens (12) d'entraînement en déplacement desdits produits découpés vers ladite au moins une ouverture (11) d'évacuation, **en ce que** les organes (10) de coupe du dispositif de coupe inférieur sont des organes de coupe rotatifs se présentant sous forme d'au moins une rangée de disques disposés à plat, côte à côte, et formant par une partie de leur tranchant, dite partie avant, la ligne (13) de coupe du dispositif (3) de coupe inférieur et **en ce que** les moyens (6) de récupération et d'évacuation positionnables en série avec le dispositif (3) de coupe inférieur comprennent une enceinte (61), dite de broyage, logeant au moins un rotor (62) à fonction de coupe, d'axe de rotation sensiblement parallèle à la ligne (13) de coupe du dispositif (3) de coupe inférieur, ladite enceinte (61) étant, pour sa communication avec l'ouverture (11) d'évacuation du dispositif (3) de coupe inférieur, munie d'une ouverture (63) d'entrée et, pour sa vidange, d'une ouverture (64) de sortie ménagée, de préférence, en un emplacement de l'enceinte (61) apte à permettre une dépose au sol par gravité du contenu de l'enceinte (61).

2. Installation (1) de coupe selon la revendication 1,
**caractérisée en ce que** les moyens (5) d'entraînement en monte et baisse du dispositif (4) de coupe supérieur comprennent :
- une structure (15) couplable au châssis (2) roulant de la moissonneuse-batteuse et comportant au moins un montant, de préférence au moins deux montants parallèles reliés entre eux par des traverses, et
- des moyens d'entraînement en déplacement du dispositif (4) de coupe supérieur à coulissement le long dudit ou des montants de la structure (15).

3. Installation (1) de coupe selon la revendication 2,
**caractérisée en ce que** ladite structure (15) est une structure mobile couplable de manière articulée au châssis (2) roulant de la moissonneuse-batteuse.

4. Installation (1) de coupe selon l'une des revendications 2 ou 3,
**caractérisée en ce que** ladite structure (5) comprend, pour son couplage au châssis (2) roulant de la moissonneuse-batteuse, d'une part, des moyens (16) de liaison à pivotement positionnés ou positionnables au niveau de l'extrémité dite inférieure du ou des montants et formant, à l'état positionné, une liaison d'axe pivot sensiblement parallèle à la ligne (14) de coupe du dispositif (4) de coupe supérieur, d'autre part, au moins un actionneur (17), tel qu'un vérin, apte à entrainer en déplacement à pivotement ladite structure (15) en fonction du positionnement relatif souhaité entre les lignes (14, 13) de coupe des dispositifs de coupe supérieur (4) et inférieur (3).

5. Installation (1) de coupe selon l'une des revendications précédentes, **caractérisée en ce que** les moyens (12) d'entraînement en déplacement desdits produits découpés vers ladite au moins une ouverture (11) d'évacuation du dispositif (3) de coupe inférieur se présentent sous forme de disques à dents dont au moins certains (121) forment avec un disque (10) de coupe du dispositif (3) de coupe inférieur avec lequel ils sont associés, une pile de disques.

6. Installation (1) de coupe selon la revendication 5,
**caractérisée en ce qu'**au moins certains (122) des disques à dents encadrent, sous forme de piles de disques, l'ouverture (11) d'évacuation du dispositif (3) de coupe inférieur.

7. Installation (1) de coupe selon l'une des revendications précédentes, **caractérisée en ce que** ladite ouverture (11) d'évacuation du dispositif (3) de coupe inférieur est ménagée dans la partie dite de fond d'un tablier (18) de coupe dont les flancs (19) sont équipés d'une vis (20) d'alimentation positionnée parallèlement et au-dessus du bord supérieur de chaque flanc (19), au niveau d'une encoche (21) ménagée dans ledit flanc (19).

8. Installation (1) de coupe selon l'une des revendications précédentes, **caractérisée en ce que** le rotor (62) à fonction de coupe logé dans l'enceinte (61) de broyage est un rotor à couteau(x) associé à un contre-couteau.

9. Installation (1) de coupe selon l'une des revendications précédentes, **caractérisée en ce que** ladite ou chaque ouverture (9) d'évacuation du dispositif (4) de coupe supérieur est munie, au niveau de la face formant dos du tablier (8) de coupe du dispositif (4) de coupe supérieur, d'une plaque (22) déflectrice.

10. Moissonneuse-batteuse du type comprenant un châssis (2) roulant équipé au moins de moyens (201) de convoyage et de moyens (202) de battage des produits convoyés et, à l'avant dudit châssis (2) roulant, pris dans le sens d'avancement dudit châssis, une installation (1) de coupe de végétaux à tiges verticales,
**caractérisée en ce que** ladite installation de coupe est conforme à l'une des revendications 1 à 9, **en ce que** l'enceinte (61) dite de broyage est disposée au dessous des moyens (201) de convoyage du châssis (2) roulant, **en ce que** l'ouverture (9) d'évacuation du dispositif (4) de coupe supérieur est positionnée au-dessus et à la verticale ou immédiatement en avant des moyens (201) de convoyage pris dans le sens d'avancement de la moissonneuse-batteuse, et **en ce que** le dispositif (4) de coupe supérieur et ses moyens (5) d'entraînement en monte et baisse forment un ensemble mobile monté à pivotement autour d'un axe sensiblement parallèle aux lignes (13, 14) de coupe des dispositifs de coupe.
